# EUROPEAN PATENT SPECIFICATION

(11) **EP 4 018 046 B1**
(45) Date of publication and mention of the grant of the patent: **09.12.2026**
(21) Application number: 20765110.0
(22) Date of filing: 21.08.2020
(51) Int. Cl.: E02F 3/00, G05B 9/02, G05B 23/02

(54) **METHOD AND SYSTEM FOR CONTROLLING A MINING AND/OR CONSTRUCTION MACHINE**
VERFAHREN UND SYSTEM ZUR STEUERUNG EINER ABBAU- UND/ODER BAUMASCHINE
PROCÉDÉ ET SYSTÈME DE COMMANDE D'UNE MACHINE D'EXPLOITATION MINIÈRE ET/OU DE CONSTRUCTION

(30) Priority: 23.08.2019 SE 1950966
(43) Date of publication of application: 29.06.2022
(73) Proprietor: Epiroc Rock Drills Aktiebolag, 701 91 Örebro (SE)
(72) Inventor: HENDEBERG, Richard, 716 92 Fjugesta (SE); GUSTAVSSON, Hans, 703 78 Örebro (SE); AYDOGAN, Mehmet, 703 61 Örebro (SE)
(74) Representative: Epiroc Rock Drills AB
(86) International application number: PCT/SE2020/050808
(87) International publication number: WO 2021/040601

(56) References cited:
- EP-B1- 1 440 211
- US-A1- 2013 317 710

## Description

### Field of the invention

The present invention relates in particular to mining and tunnelling, and more specifically to a method and system for controlling operation of a mining and/or construction machine. The invention also relates to a mining and/or construction machine, as well as a control system that implements the method according to the invention.

### Background of the invention

With regard to mining and tunnelling, for example, there is a constant ongoing process of improving e.g. efficiency, productivity and safety. Examples of changes/improvements that are carried out to an increasing extent is the automation of, fully or partly, and/or to control remotely, various processes occurring in mining.

It is, for example, often desirable that at least part of the machines that are used in mining/tunnelling can be driven in a fully autonomous mode, i.e. without an operator being required to influence the steering. Autonomous operation, however, is not always suitable or economically justifiable.

This may be the case, for example, in environments that constantly change. There exist, for example, mines where new galleries/drifts frequently arise, and where older drifts may be refilled, which normally has an impact on autonomous operation of machines. This may be because a setup of a fully autonomous solution oftentimes is relatively time and resource consuming, and a new setup is at least partially required as soon as the environment in which the autonomous machine is driven changes.

Consequently, there oftentimes situations where an operator needs to be present at the mining and/or construction machine, e.g. in order to manually manoeuvre the machine. Operator presence at a machine may also be required in certain situations also in case the vehicle is being autonomously operated e.g. in case of a fault. There may also exist other situations when an operator may need to be present at a machine. For reasons of safety, there is in general a desire that machines are not driven by an onboard operator, or an operator at all being present at the machine. As mentioned, this may not always be possible, and also when the machines are being e.g. remote controlled it is desired for reasons of safety that the machine behaves as expected by the operator performing the remote control in order to safely manoeuvre the machine in the environment in which it is present.

Furthermore, machines of this kind are in general controlled by an onboard machine control system, and in order to ensure safe operation from an operator point of view it is, inter alia, a requirement that the control system controls the machine in accordance with the intention of the operator in a manner such that unexpected situations do not arise when manoeuvring the machine.

US 2013/0317710 A1 discloses a construction machine in which a second controller verifies a command from a first controller based on a second sensor signal.

EP 1 440 211 B1 discloses a construction machine with a steer-by-wire control scheme.

### Summary of the invention

It would hence be advantageous to achieve a method and system that may improve reliability and/or predictability of the control system control of a mining and/or construction machine when an operator provides control commands using operator controllable means.

According to the present invention, it is provided a method according to claim 1.

Mining and/or construction machines are oftentimes heavy and of large dimensions. These machines, in general operate in environments in which distances to surrounding obstacles may be small, where there constantly may be an imminent risk for collisions, in particular when the machine is in motion. Potentially dangerous situations may also arise when the machine is standing still. For example, the machine may comprise manoeuvrable equipment that may give rise to motions, and the machine, and it highly undesirable that the machine is unexpectedly set in motion when standing still. Hence, an operator may be subjected to potentially dangerous situations only by being present in the vicinity of a machine. In particular, an unexpected motion of the machine or equipment thereof is highly undesirable. This also applies when the machine is in motion, e.g. due to surrounding rock or other obstacles frequently occurring, as well as other machines.

One example of a type of mining and/or construction machines where the above apply is so called LHD (Load-Haul-Dump) machines, which may be used to remove and transport broken rock/ore from, for example, a location where blasting has been performed to another location for further processing. There also exist various other types of machine being used in e.g. mining and/or tunnelling where the above apply. There may exist requirements, governmental or otherwise, regarding safety measures to be taken when designing control systems of machines of this kind, and the control system may be developed as a single, safety classified entity, where changes may not be made to the control system without ensuring that the remaining portions of the control system still complies with the requirements it is designed to fulfil.

Even if machines of the kind to which the present invention relates may not be subject to e.g. mandatory government regulations regarding safety measures, e.g. machine manufacturers may still design the machine control systems in a manner such that various existing safety regulations are still fulfilled.

According to the invention, it is an object to provide a control system that may be designed to comply with existing safety regulations, e.g. of movable machines, or other safety regulations, but which may also be utilised without the explicit object of complying with any such regulations. In particular it is an object of the invention to provide a method and system that has the object of reducing the risk for situations where machine behaviour does not correspond to the expected machine behaviour given the current status of operator controllable means of the machine.

This is accomplished by means of a system where a control unit of a control system is configured to request a motion of an actuator based on operator control commands given through operator controllable means. This request, prior to the motion being actually carried out, is validated by an I/O module that is configured to control the actuator being utilised to bring about the requested motion.

In this way, a control system may be provided where it may be ensured that a requested motion is also an intended motion of the operator, where the motion can be prevented or otherwise influenced when this is not the case. Hence the requested actuator motion may be prevented when it is determined that the requested motion will cause an unexpected machine behaviour for the current state of the operator controllable means.

Furthermore, since this safety functionality is provided in an I/O module forming the link between the actuator and control system, additional functionality may be added to the control system e.g. without the complete control system facing the need for being re-complied with safety regulations, since it can be ensured that the motion being carried out corresponds to an expected motion given the states of the operator controllable means. Hence it can be determined whether the requested activation of an actuator will cause an expected motion of the mining and/or construction machine and/or motion of equipment attached thereto.

When performing the determination, the I/O module receives a representation of the current state of the operator controllable means, where the received state is used in the determination whether the requested motion will result in a machine behaviour that corresponds to an expected machine behaviour.

According to embodiments of the invention, the I/O module may also be configured to receive sensor signals from at least one sensor, and determine whether the requested activation will cause a motion corresponding to an expected machine behaviour at least partly based on these sensor signals. For example, sensor signals may be utilised to determine whether other criteria are fulfilled to allow the requested motion to be carried out, where the motion may be arranged to only be carried out when such additional criteria are fulfilled.

There may exist various different sensors, and sensor signals from such sensors may represent various different states of the machine. As an example, in case the machine is standing still, it may be a further requirement that a cabin door of the cabin is closed in order to carry out the desired actuator motion. This may be indicated e.g. by a door sensor. This is because the operator may be standing outside the cabin while reaching into it, and deliberately or not cause a joystick deflection. The operator may thereby be accidentally exposed to potentially dangerous situations. According to embodiments of the invention, if such a door sensor indicates that a cabin door is open while the machine is standing still, the requested motion may be prevented irrespective of whether the joysticks actually indicate that the requested motion is to be carried out, since in this case it may be determined that the requested motion may not be an intended motion.

Conversely, when the machine is in motion, and/or travelling at a speed exceeding a predetermined speed, an indication of an open cabin door may be accepted since it may be assumed that the operator is not present outside the machine.

The I/O module may be configured to control motion of the at least one actuator by converting control signals received from the at least one control unit into actuator drive signals causing the actuator to perform a requested motion. That is, the I/O module translates the request into suitable control signals required for actually achieving the physical motion of the actuator. In this way, the I/O module will be completely in control of whether a requested motion is actually to be carried out.

When a control unit of the control system requests a motion involving actuation of an actuator, the request may e.g. be in the form of a data message transmitted on a data bus for reception by the I/O module. The I/O module may hence be configured to receive the request for a motion of the at least one actuator from the first control unit through a data bus. The I/O module may be configured to receive the request from various control units of the control system.

Furthermore, the I/O module may be configured to receive the current state of the operator controllable means through a second data bus being different from the data bus on which the request is made. Thereby data relating to the determination may be transmitted on a separate data bus which may be dedicated for data related to determinations being made by I/O modules. According to embodiments of the invention, a different protocol may be utilised in the communication on this data bus in comparison to the communication on the first data bus. Also, e.g. operator controllable means and/or sensors may be configured to communicate directly with the I/O module. The operator controllable means comprise separate means, such as resolvers, for communicating current state of the operator controllable means to the I/O module, and e.g. sensors may be dedicated for use by the I/O module. According to embodiments of the invention, the I/O module utilises signals of the same sensors, resolvers etc. as are used by the control system when generating e.g. requests for motions to be communicated to the I/O module. This has the advantage that an operator may perform e.g. calibrations and other changes of machine response to changes of state of the operator controllable means, where still such changes will be taken into account by the I/O module when determining whether a requested motion corresponds to an expected motion, and where the I/O module e.g. may prevent unexpected motions, and also ensure that motions e.g. are not carried out too fast or otherwise in undesired manners.

The determination of the I/O module according to embodiments of the invention is, as stated, made by a processing unit, and the I/O module may comprise a plurality of processing units to provide for further safety by a determination being made by at least one processing unit of an I/O module being validated by another processing unit of the I/O module. This also provides for redundancy in case a processing unit of the I/O module malfunctions.

The operator controllable means may, for example, include one or more joysticks for setting the machine in motion and controlling the machine when in motion, and/or controlling equipment of the machine. The operator controllable means may also comprise e.g. switches, levers, buttons, knobs etc, and touch sensitive displays.

It will be appreciated that the embodiments described in relation to the method aspect of the present invention are all applicable also for the system aspect of the present invention. That is, the system may be configured to perform the method as defined in any of the above described embodiments. Further, the method may be a computer implemented method which e.g. may be implemented in one or more control units of a mining and/or construction machine.

Further characteristics of the present invention and advantages thereof are indicated in the detailed description of exemplary embodiments set out below and the attached drawings.

### Brief description of the drawings

Figs. 1A-B illustrates an exemplary machine which may be configured to operate according to embodiments of the invention;
Fig. 2 illustrates an exemplary portion of a control system of the machine of Figs. 1A-B;
Fig. 3 illustrates an exemplary method according to the invention.
Fig. 4 illustrates an I/O module according to embodiments of the invention.
Fig. 5 illustrates an alternative method for determining faults in machine turning motions.

### Detailed description of exemplary embodiments

Embodiments of the present invention will be exemplified in the following in view of a particular kind of mining and/or construction machine. The invention is, however, applicable for all kinds of mining and/or construction machines that may be set in motion and move around in an environment, where operator controllable means are present to allow an operator to request a change in speed of or direction of motion of the mining and/or construction machine, and/or a change in motion of equipment attached to, e.g. forming part of, the mining and/or construction machine by changing a state of the operator controllable means, and/or otherwise cause a movement to be carried out by the machine, e.g. when standing still. For example, according to embodiments of the invention, the mining and/or construction machine may comprise a truck, a drilling rig, a rock reinforcement rig, or any other mining and/construction machine that may be set in motion to allow the machine to be driven in an environment such a mine and/or tunnel.

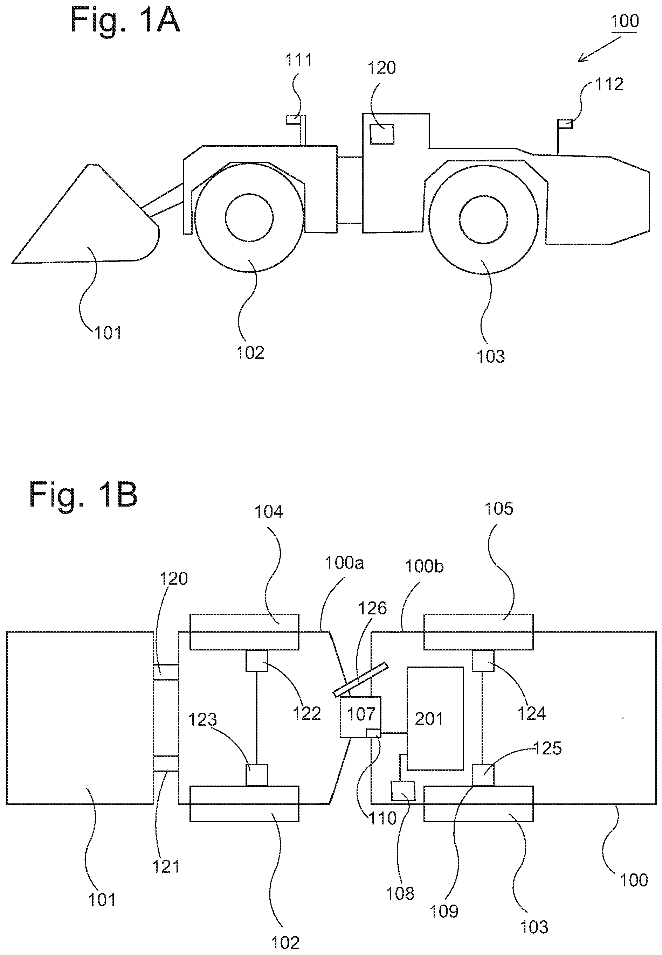

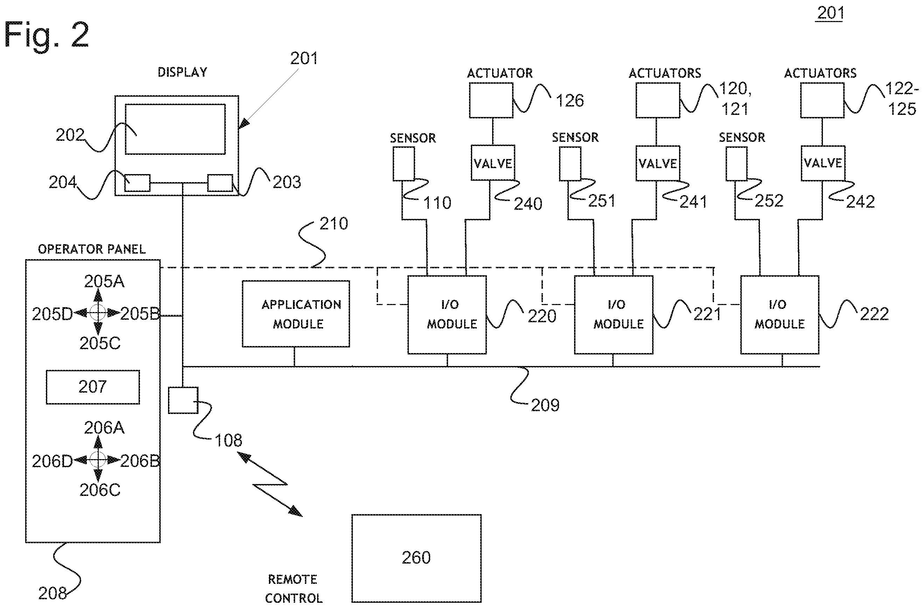

Figs. 1A and 1B illustrates a side view and elevated view, respectively, of an exemplary machine 100, which may comprise a system according to the present invention. According to the present example, the machine 100 is a load-haul-dump (LHD) machine, and is used to load and transport away materials such as excavated rock through the use of a bucket 101. The machine 100 comprises, apart from the bucket 101, wheels 102 - 105 for allowing the machine to be set in motion and a control system comprising at least one control unit 201. The control unit 201 is configured to control various of the functions of the machine 100, and will be further discussed with reference to figure 2.

According to the present example, and as is discussed further below, the control unit 201 comprises a display unit being arranged in an operator cabin 120 of the machine 100. Machines of the disclosed kind may comprise more than one control unit, e.g. a plurality of control units, where each control unit, respectively, may be arranged to be responsible for monitoring and carrying out different functions of the machine 100. For reasons of simplicity, however, it will be assumed in the following that the various functions are controlled by the control unit 201. The control unit 201 may, for example, be configured to request motions to be carried out by various actuators such as cylinders/motors/pumps etc., e.g. for manoeuvring the machine e.g. in terms of setting the machine in motion, stopping the machine, and controlling and manoeuvring equipment forming part of or being attached to the machine, such as the bucket 101 e.g. when loading or unloading rock. The request for motions may be initiated e.g. by driver controllable means for controlling the machine 100.

In the case the machine is a drilling rig, the control system may e.g. be configured to control e.g. booms of the drilling rig and one or more drilling machines of the drilling rig. Similarly, the control unit may be configured to control manoeuvring of the drilling rig when moving around in a mine or tunnel.

The machine 100 further constitutes an articulated machine, where a front portion 100a is connected to a rear portion 100b by means of a hinge 107, and the machine is consequently steered by means of articulated steering to facilitate manoeuvring of the machine. Machines of the disclosed kind are often driven in surroundings where the distance to surrounding rock walls may be small, and articulated machines may provide manoeuvrability advantages over non-articulated machines in such environments. As is appreciated by the person skilled in the art, the illustrated machine merely forms an example of usability of the invention, and, in principle, the invention is applicable for essentially any kind of movable machine being utilized in mining and/or construction.

Motion of the machine 100 and/or equipment thereof is generated by setting one or more actuators in motion. With regard to the exemplary machine of Figs. 1A-B, the machine comprises actuator e.g. in the form of hydraulic cylinders 120, 121 for controlling raising/lowering the bucket 101, where further actuators may be present in this regard, e.g. to control tipping of the bucket 101. Furthermore, the machine 100 comprises actuators in the form of e.g. hydraulic motors 122-125 for propelling the machine 100. According to the disclosed example there is also an actuator in the form of one or more hydraulic cylinders 126 controlling articulation of the joint 107.

Machines of the disclosed kind may e.g. be configured to be controlled by an operator being present in the machine, or configured to be remote-controlled, and may, for example, comprise a front 111 and a rear 112 video camera, which are connected to the control unit 201 and which may be utilized to transfer video signals to the control unit 201 for further transmission e.g. to a remote-control operator in a control room in case the machine is remote-controlled. The video signals may also be displayed on one or more displays of the cabin 120 to be utilised by an on-board operator to facilitate manoeuvring of the machine, e.g. since visibility may be limited.

The machine may also comprise various further non-disclosed features. For example, the machine may be provided with range detectors such as laser scanners to determine distances e.g. to surrounding rock and/or obstacles in the travel path of the machine. Cameras/sensors of the described kind may be use in remote control of the machine or, which may also be the case, in monitoring and surveillance of an autonomously operating machine, and also be utilized by an operator manually operating the machine and e.g. form part of an operator assist system. According to embodiments of the invention, no such camera/scanners are present, and the machine may be completely manually operated without such aid.

As was mentioned above, machines of the kind disclosed in Figs. 1A-B may be of very large dimensions and exhibit substantial mass, and even more so when carrying load, where machines of the disclosed kind may be designed to carry e.g. 10-30 tonnes of broken rock. Unexpected machine behaviour is therefore highly undesirable, since such behaviour may subject an operator being present in, or in the surroundings of, the machine to potentially dangerous situations, and also other personnel or objects being present in the environment of the machine 100.

As was mentioned above, according to embodiments of the invention, it is an object to provide a control system that may reduce the risk for unexpected situations to arise. This is performed through the use of I/O modules which, upon receiving a request for a motion verifies that resulting machine behaviour as represented by the motion to be carried out will also correspond to the machine behaviour that can be expected given the current states of operator controllable means of the machine.

An exemplary control system 200 according to embodiments of the invention, and according to the present example given with reference to the articulated machine of Figs. 1A-B, is exemplified in fig. 2.

According to the exemplified control system, the control system comprises a display unit 201 which, e.g., may be arranged in the cabin 120 of the machine 100. A display 202 of the display unit 201 may be used e.g. to communicate data to the operator, where e.g. data regarding the status of the machine may be displayed. According to embodiments of the invention the operator may also use the display 202 for communication with the display unit/control system, e.g. by the display 202 being a touch sensitive display to allow the operator entering data and/or select among options being presented by the display 202. The display unit 201 further comprises at least one processing unit 203, such as a central processing unit (CPU) being configured to run software controlling operation of the machine 100. The software may be stored in a non-transitory memory 204 of the display unit 201 and connected to the processing unit 203. According to the present example, the functions to be carried out by the machine 100 are determined by the display unit 201 on the basis of e.g. the state of operator controllable means and e.g. various sensors on the machine. For example, each of the actuators 220-226 may comprise one or more sensors to indicate e.g. an angle, a position, a flow etc. According to embodiments of the invention there may be any number of control units being responsible for determining actions to be taken by the machine 100, where such control units may or may not comprise a display unit. According to embodiments of the invention the display 202 and control unit form separate entities.

The display 202 may hence form operator controllable means for communicating with the control system of the machine 100, where the operator may request various actions to be taken.

Fig. 2 also illustrates further operator controllable means for controlling the machine 100. These include joysticks 205, 206 which may form part of an operator panel 208. The joysticks 205, 206 may be utilized by the operator to control various functions of the machine 100. The joysticks 205, 206 may be used, for example, for accelerating, decelerating and steering the machine 100, where operator inflicted joystick deflections may be translated to suitable control commands regarding control of the hydraulic motors 122-125, and the hydraulic cylinder 126 for controlling the joint 107 to steer the machine by allowing relative motion of the front portion 100a of the machine 100 in relation to the rear portion 100b. The joysticks 205, 206 may also be utilised e.g. to control various equipment of the machine 100 that may perform a motion. For example, the joysticks may be utilised e.g. in loading and unloading operations by manoeuvring the bucket 101, where, again, the display unit 201 may determine suitable control of the hydraulic cylinders 120, 121 based on the joystick deflection. The joysticks may also be used for control of other equipment if present.

The operator panel 208, may also include various additional means 207 for allowing operator communication with the control system, such as e.g. buttons, keyboards, switches etc. The operator cabin may also comprise further and/or other types of operator controllable means.

The control system further comprises a data bus 209, which may e.g. be a CAN bus, or any other suitable kind of data bus, and which may be used to allow communication between various units of the machine 100, and which may utilise e.g. CANopen safety protocol in communication. For example, the joysticks 205, 206 may communicate the current deflection, i.e. position of the joystick control sticks 205A, 206A to the display unit 201. This communication may be performed by the operator panel e.g. comprising suitable decoder means for translating joystick deflection into a representation of the deflection for transmission on the data bus 209.

The actual control of the actuators, i.e. producing the actuator drive signals that actually causes the actuator to physically perform a requested motion is effectuated by an I/O module 220-222, which translates the request from the display unit 201 into suitable measures, such as applying the voltage/current/fluid flow that is required to achieve the desired motion, where this e.g. may comprise control of a valve that in turn causes the actuator motion. It may also consist of e.g. applying a current or voltage to the actuator.

As was discussed above, with regard to manoeuvring of machines of the disclosed kind, operator safety is of high importance, and there may also exist regulations regarding safety measures that are required to be taken. Such regulations may e.g. include the European machinery directive. In particular, it is of high importance that the control of the machine using the control system ensures that the machine behaves as expected by the operator. This may be ensured by the whole control system being configured to conform with safety classifications.

According to the present invention, instead, a solution is utilised where the complete control system need not fulfil safety classifications while still applicable legislation may be complied with. This is accomplished by a system where the I/O modules 220-222 are provided with functionality that allows safety measures to be upheld. This has the advantage, for example, that the parts of the control system in which the control of the machine functions is integrated, such as the display unit 201, may be provided with new/additional functionality without the need for the complete system to be recertified e.g. with regard to safety measures. This allows that functionality may be added more freely, e.g. during the life cycle of the machine, and with less effort.

Also, as is often time the case, control systems of the disclosed kind, in particular with regard to functionality, are often "inherited" from one machine generation to another and may hence comprise e.g. software encompassing development spanning over a number of years.

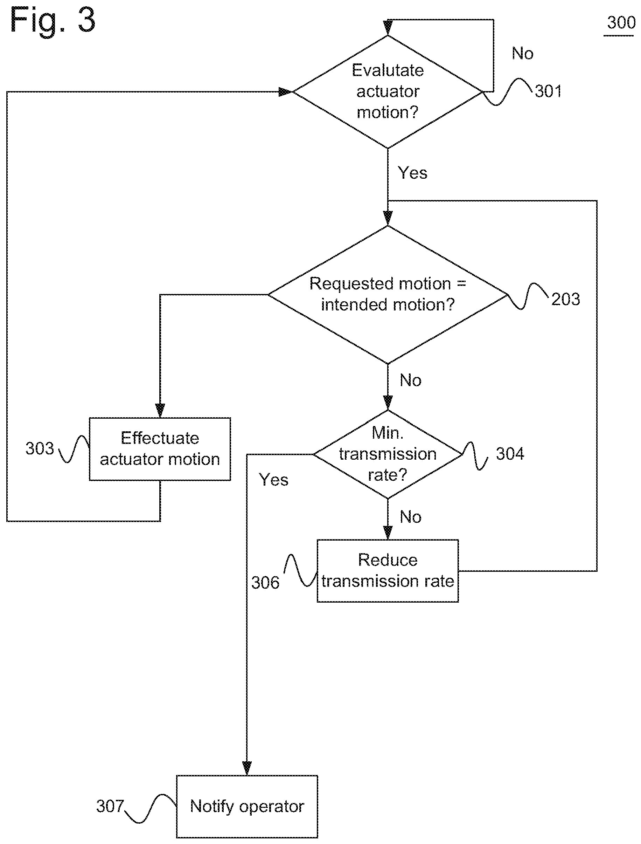

Embodiments of the invention will be exemplified with reference to fig. 3, in which a method for performing an exemplary manoeuvre is discussed for purposes of illustration. In general there may exist a number of different machine manoeuvres for which the method according to embodiments may be applied, e.g. the motions exemplified above.

The method may be configured to be carried out by one or more or all of the I/O modules 220-222. This may depend e.g. on the type functionality that is being carried out by the particular I/O module. The notation I/O module is utilised herein because the I/O modules constitute interfaces to the control system, where control signals of the control system are converted to signals by means of which an actuator may respond by converting the signal into a mechanical motion. In general, when the operator requests an action to be carried out, according to the present example by manoeuvring either of the joysticks 205, 206 (or other operator controllable means), where the joysticks may be deflected e.g. in directions 205A-D, 206A-D and possibly also in any direction therebetween. These joystick deflections may be configured to perform various different movements with regard to the machine 100 and equipment attached thereto as discussed above.

When a joystick movement is carried out by the operator, a representation of the deflection of the joystick 205 and/or 206, i.e. the direction and the extent to which the joysticks are deflected from a reference position, is transmitted from the operator panel 208 to, according to the present example, the display unit 201 for further processing by the processing unit 203. The deflection signals may be transmitted over the data bus 209. The operator panel 208 may hence comprise resolver means for translating joystick deflection into corresponding digital signals representing the joystick movement for transmission to the display device 201. The processing unit 203 then determines, e.g. through suitable calculation, movements to be carried out by one or more actuators of the machine 100 in response to the joystick deflection.

For example, since the joysticks 205, 206 may be utilized for various different functions to be carried out by the machine, the processing unit 203 may determine the kind of manoeuvre that is currently requested to be carried out, and determine suitable actuator control signals in response. The actuator control signals are then utilized to request actual actuator movement, such as hydraulic cylinder movement, electric motor motion and/or hydraulic pump/motor movement or any other kind of actuator movement of the machine 100 that may be controlled in this manner.

When the actuator control signals have been determined by the processing unit 203, these control signals are transmitted, according to the present example, using the data bus 209, to the one or more I/O modules being responsible for actually causing the requested actuator movement to take place. Hence, according to the present example, the processing unit 203 may send actuator control signals e.g. to one or more of the I/O modules 220-222. In case a system according to the present invention is not utilized, the one or more I/O modules 220-222 will then effectuate the requested motion by requesting the one or more actuators being involved in the motion, e.g. through control of one or more valves or other means being utilized to cause the requested actuator motion. Hence, in this way, e.g. any kind of machine motion may be effectuated in a desired manner as determined by the control of the processing unit 203.

According to the invention, an additional safety measure is provided to ensure that the motion which the processing unit 203 requests to be carried out is also a motion that correspond to a motion that the operator intends to be carried out, and hence a motion that does not result in an unexpected machine behaviour. This is accomplished by providing additional intelligence to the I/O modules 220-222. The I/O modules, therefore, includes processing means in this regard. The method according to figure 3 is carried out by these I/O module processing means.

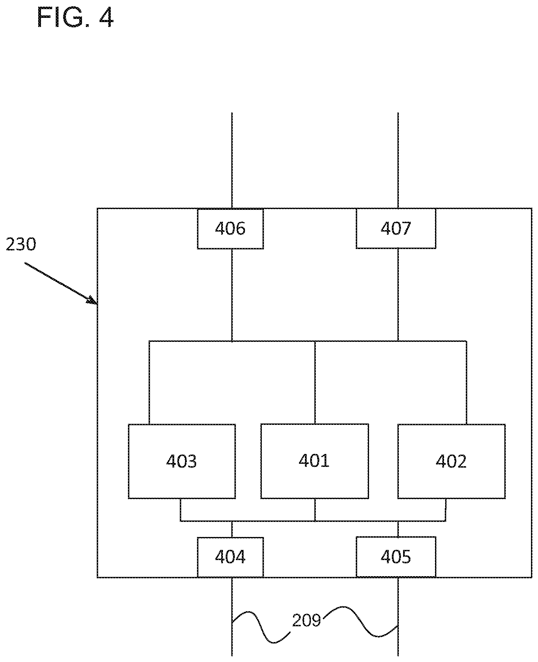

Fig 4. Illustrates an example of an I/O module according to embodiments of the invention, according to the present example the I/O module 220. The I/O module comprises a first I/O module processing unit 401 for receiving control signals e.g. from the display unit 201 e.g. through an interface 404/405 which may be configured to receive signals from the data bus 209.

Returning to figure 3, the method 300 starts in step 301, where it is determined whether an evaluation of a requested actuator motion is to be carried out. When this is the case, the method continues to step 302. The transition from step 301 to step 302 may, for example, be initiated by the I/O module processing unit 401 receiving a request for an actuator motion from the display unit 201, where the request hence may be received over the data bus 209.

As was mentioned, according to prior art solutions, the I/O module, upon receipt of a request for an actuator motion causes the motion to be carried out without any further measures being taken. This may be performed, for example, by the received request being translated into suitable actuation signals, e.g. in the form of a voltage current or hydraulic flow for causing the actuator to perform the desired motion, where these actuator signals may be generated by an output interface 406/407.

However, according to embodiments of the invention, instead of the I/O module 220 simply causing the requested actuator motion to be carried out, the I/O module processing unit 401 determines, step 302, whether the requested motion actually corresponds to an intended motion. The I/O module processing unit 401 may, in this regard, for example, utilize various signals in the determination. For example, the I/O module processing unit 401 may be configured to receive signals representing the current deflection of the joysticks 205, 206 from the operator panel 208. These signals may, for example, already be present on the data bus 209 for reception by the I/O module processing unit 401.

Alternatively, or in addition, the I/O module processing unit 401 may also be configured to receive e.g. the joystick deflection signals over a separate communication channel, such as a separate data bus, indicated by dashed line 210 and hence be transmitted specifically for this matter. The operator panel may in this regard comprise e.g. separate resolver means for determining the deflection of the joysticks 205, 206 for transmission on the additional data bus 210 and to provide redundancy.

According to the present example, the display unit 201 requests a right turning motion of the machine, i.e. the front portion 100a turning right in relation to the rear portion 100b through the use of the joint 107/hydraulic cylinder 126. The I/O module processing unit 401, in step 302, then determines whether the request for a right turning motion received from the display unit 201 is actually a turning motion being the intention of the operator to be carried out. This may be performed, for example, by determining, using the signals representing joystick deflection, that the appropriate joystick 205, 206 in fact has been deflected to a position corresponding to a request for a right turning motion, and it may also be determined if the deflection corresponds to a magnitude e.g. in requested actuator speed. If it is determined in step 302 that the requested motion corresponds to an intended motion, the I/O module processing unit 401 requests, step 303, the requested actuator movement to be carried out e.g. by providing suitable drive signals on an output interface 405 to the hydraulic cylinder 126, either directly or e.g. by delivering valve control signals to one or more valves 240 controlling the hydraulic cylinder 126 to thereby cause the angular change of the joint 107.

When, on the other hand, it is determined in step 302 that the requested motion does not correspond to an intended motion, e.g. because the joystick deflection indicates a request for a different motion, or no motion at all, when compared to the request received from the display unit 201, the method continues to step 304 where the requested motion may be influenced by the I/O processing unit 401. This influence may, for example, consist of the I/O processing unit 401 prohibiting the requested motion from being carried out at all, and this may also be communicated to the display unit 201. Alternatively, the I/O processing unit 401, in case this is considered appropriate, may perform the requested motion at least in part at a reduced speed. Whether or not this is performed may depend e.g. on the type of motion being requested.

The I/O module may be designed to fulfil e.g. legislative requirements regarding safety measures so that such measures need not be taken with regard to other parts of the control system. The I/O modules acts as interface towards the control system on the one hand, and the actuator causing the actual motion on the other hand. This may allow that, for example, the operator panel and display unit need not be designed to fulfil such safety classifications. This, in turn, may facilitate development of the control system since it otherwise may be difficult to ensure that each and every component of the control system otherwise fulfils such classification. However, by applying the safety measures on the I/O modules controlling the actuators a high level of safety fulfilling that requirements may still be obtained.

According to embodiments of the invention, the I/O processing unit 401 may, in addition, utilize further signals, such as e.g. sensor signals, when determining whether a requested motion is also an intended motion. For example, it may be determined whether the machine 100 is standing still or in motion. In case the machine 100 is standing still it may, for example, be a further requirement that e.g. a door sensor indicates that a cabin door of the cabin 120 is closed in order to carry out the desired actuator motion. If the cabin door is open while the machine 100 is standing still, the operator may be standing outside the cabin while reaching into it and deliberately or not cause a joystick deflection. The operator may thereby be accidentally exposed to potentially dangerous situations e.g. in case the front portion 100a and rear portion 100b are brought towards each other by the joint 107/cylinder 126. Hence, if the door sensor indicates that the cabin door is open, the requested motion may be prevented by the I/O processing unit 401 irrespective of whether the joysticks 205, 206 actually indicate that the requested motion is to be carried out, since in this case it may be determined that the requested motion may not be an intended motion.

Conversely, if it is determined that the machine 100 is in motion, and/or travelling at a speed exceeding a predetermined speed, an indication of an open cabin door may be accepted since it is unlikely that the operator would be present outside the machine when this is the case, and hence e.g. acceleration and turning may be allowed even though e.g. a door sensor indicates an open door.

There may also be further factors that influence whether the requested motion is to be carried out or not. For example, e.g. hydraulic pressures and/or temperatures of actuators may be utilised to determine whether the requested motion is to be carried out or not, or to a different extent than the requested extent.

In general, there may exist a number of situations in which e.g. various sensor signals may be utilized by the I/O processing unit 401 to determine whether a requested motion is to be actually carried out. Further determinations may be performed also while the motion is actually being carried out. For example, signals from an angle sensor 110 indicating the articulation angle of the joint 107 may be utilized by the I/O processing unit 401 to monitor changes in articulation angle while the turning motion is being carried out to ensure that the requested motion is actually being carried out, and also in the right direction and to the desired extent, thereby adding further safety to the system.

Furthermore, sensor signals of various other sensors may also be used in the determination. For example, sensor signals representing e.g. valve positions of one or more valves, or joints or actuators may also be utilized by the I/O processing unit 401 to determine that a motion is carried out as expected. According to the invention, an I/O module may be designed to fulfil e.g. safety classifications that apply to the particular type of machine type in which it is to be utilised.

According to embodiments of the invention, the I/O may be designed to comprise further safety measures. For example, the I/O module may comprise two or three processing units, where each of the processing units may monitor operations of the other processing units, and/or provide redundancy. This is illustrated in fig. 4, where the I/O module 220 comprises three processing units 401-403. When e.g. a determination according to the method of fig. 3 is performed by one processing unit of the I/O module, such as processing unit 401, one or both of the other processing units 402, 403 may be used to validate that the determination made by the processing unit 401 is correct.

The use of a plurality of processing units may also be used to ensure e.g. redundancy so that at least one processing unit may perform the determination according to the invention even if one or more other processing units malfunction.

Furthermore, when it is determined by the I/O module that the requested motion is to be prohibited, further measures may also be taken. For example, if it is determined that a display unit request for a turning motion is not to be carried out, e.g. due to the joystick deflection indicating otherwise, the machine may, in addition, in case it is in motion, be stopped to prevent further dangerous situations from arising. It may be advantageous to stop the machine in case faults are indicated to reduce the risk for accidents from happen e.g. because machines of the disclosed kind may be large and heavy, and operate in narrow environments. Furthermore, in order to ensure safe operation of an I/O module, further hardware may also be duplicated to provide for redundancy. For example, input/output interfaces 404/405 and 406/407 may be duplicated for redundancy as illustrated in fig. 4.

The sensors that are utilised by, and connected to, the I/O module may be duplicated, also actuators controlled by the I/O module may be duplicated to increase accuracy in the determination. Still such sensors may comprise sensors that are used by the display unit 201 in the general control of the machine, and this may also apply to other sources of input signals to the I/O module.

According to the invention, it is provided a system where the I/O modules receive a request for a motion from another entity of the control system via a data bus, whereupon the I/O modules using data from one or more sensors or other means determines whether the requested motion will result in a motion that is also expected, and only when this is the case the motion will also be carried out. The invention hence does not perform the initial determination of how the machine is to be controlled on the basis of received change of state of operator controllable means, but rather prevents the machine from behaving in an unexpected manner by other parts of the control system making e.g. erroneous decisions.

According to embodiments of the invention, data being utilized by the I/O module in the determination may be transmitted over the same data bus as the requests from the display unit are transmitted and on which other date of the control system is being communicated. However, as discussed above, according to embodiments of the invention and which is also the case according to the present example, data being utilized in determinations by the I/O modules may instead be communicated through a separate data bus. Hence e.g. raw data regarding the deflection of the joysticks 205, 206 may be transmitted on the separate data bus to the I/O module, where the operator panel may comprise additional resolver means specifically for this matter, and where this may apply also to other sensors means of the machine 100.

A machine may comprise a plurality of I/O modules, where different I/O modules may be designed to perform determinations according to the invention for various different actuators. According to the example of fig. 2, there are three different I/O modules, where e.g. I/O module 221 may be configured to control bucket 101 operation through hydraulic cylinders 120, 121, e.g. using one or more valves 241 and one or more sensors 251. Similarly, I/O module 222 may be configured to control propulsion of the machine 100 through hydraulic motors 122-125, e.g. using one or more valves 242 and one/or sensors 252. In principle a machine may comprise any number of I/O modules, where each I/O module may be responsible for any suitable number of actuators. Also, there may be more than one I/O module involved in a determination of whether an actuator motion is to be carried out. For example, it may be required that one or more other I/O modules also determines that a motion is to be carried out in order for the motion to actually be carried out. For example, with regard to the above example, the I/O module 222 may provide signals regarding whether the machine is in motion or not, and another I/O module may e.g. be configured to receive and forward signals form a door sensor.

As has been explained above, the invention may be utilised for numerous functions of the machine to ensure that a requested motion is carried out only when it is determined that the requested motion also results in a machine behaviour that actually corresponds to a machine behaviour that is expected by the operator. One stated example of such a function comprises machine turning motions. According to the above example, which relates to articulated machines, the machine turning motion is carried out by an actuator such as a hydraulic cylinder 126.

The motion of such actuators is controlled by directional control valves (DCV). It is, however, in general not sufficient to determine the articulation angle change of the joint 107 solely by determining the position of a directional control valve controlling the actuator, and thereby the pressurization of the actuator, but an angle sensor is also utilised. This is because of the following. Directional control valves in general comprise a spool slidably received in a bore of the valve body, where the spool can be moved in opposite directions to control flow fluid to and from work ports, and where a spool position sensor may determine the position of the spool.

In principle, the change in length of the hydraulic cylinder 126, which may be translated to a change in articulation angle, may be determined from the spool position sensor, since the change in position may indicate the spool opening and/or closing a flow. Solutions of such kind, however, would not, for example, be capable of detecting a hose burst between the directional control valve (DCV) and the actuator 126. In such a situation, the spool will move but the articulation angle will not change because the actuator 126 will not receive any oil.

Also, situations where e.g. the hydraulic pump providing the hydraulic fluid for manoeuvring the actuator 126 is at stand-by pressure and thereby not providing sufficient pressure for activating the actuator, will not be detected. In this case, the spool will move but the steering angle will not change because there will not be enough hydraulic pressure.

In order to increase safety, a typical approach is to install an articulation angle measurement sensor, such as angle sensor 110 above, to directly determine the articulation (steering) angle of the joint 107. Such sensors may, for example, be in the form of a hydraulic cylinder position sensor, i.e. measuring the actual stroke of the hydraulic cylinder piston. The sensors may e.g. also be any other suitable type of sensor that delivers output signals from which an articulation angle may be determined.

The use of an articulation angle measurement sensor hence provides advantages, but this solution also face challenges. For example, it may be difficult to find a suitable location for installation of the angle sensor. The possible locations to accurately be able to determine the articulation angle are limited, and there may be various components that compete for the same space. Furthermore, the angle measurement sensor may need to be installed in a manner where the sensor is poorly protected from the environment of the machine, thereby being prone to get damaged more easily, with possible stops in the utilisation of the machine as result in wait for the sensor to be replaced/repaired. Wear and tear of the machine may also render readings from such sensors less reliable.

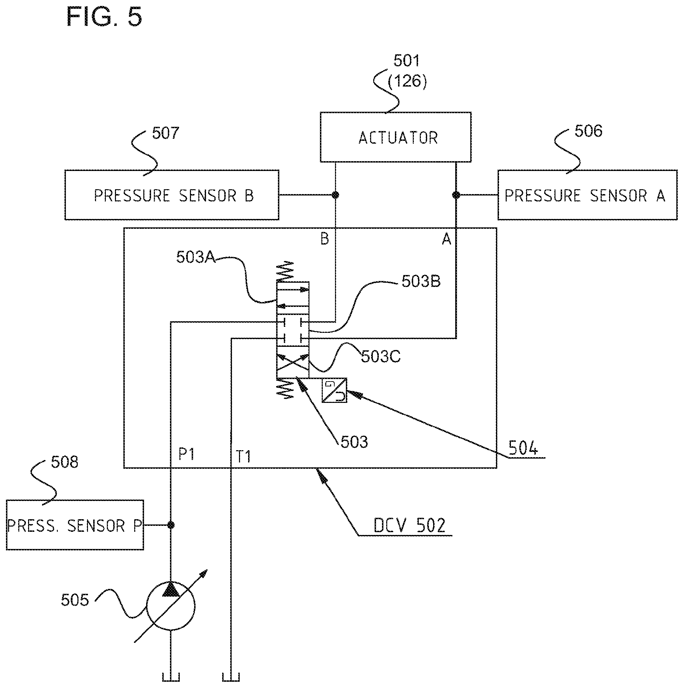

In view of this, an alternative system design has been developed, and fig. 5 illustrates an alternative method, or a method which may be utilised in addition to the use of an articulation angle sensor, such as angle sensor 110, to determine the current articulation angle change of e.g. joint 107. The disclosed method may also be utilised to detect various faults in the hydraulic circuit that may be used in the decision of an I/O module when determining whether a request motion is actually to be carried out, and/or be stopped once commenced.

It is to be understood that the disclosed solution also may be utilised to determine a change in position e.g. for any other actuator being used for generating a back and forth motion, and hence not only for determining a change in articulation angle. For example, the disclosed solution may be utilised e.g. for determining the change in position of lifting cylinders used e.g. in lifting the bucket of a machine of the kind disclosed in Figs. 1A-B, or a dump box of a mine truck. Various other uses are also contemplated as is realised by the person skilled in the art. For example, the actuator need not be a hydraulic cylinder, but may be of any suitable kind being used for generating a back and forth motion, linear or non-linear.

According to the embodiment illustrated in fig. 5, an actuator 501, such as the hydraulic cylinder 126 of fig. 1B, is controlled by means of a directional control valve (DCV) 502. The exemplified DCV comprises a three-state spool 503, which is configured to control hydraulic fluid being supplied to the actuator 501 by a hydraulic pump 505, where the actuator 501 hence may be configured to allow a back and forth motion, such as a cylinder for controlling the articulation angle by allowing a reciprocating motion. The actuator 501, in this case the hydraulic cylinder 126, is actuated by controlling the spool 503 to connect either of the spool states 503A, 503C to the spool work ports, and where, according to the present example, the hydraulic cylinder 126 may also be stopped at any desired position, indicated by the middle state 503B of the spool 503 stopping all flows of hydraulic fluid.

The position of the spool 503 may be detected by a spool position sensor 504 to ensure that the spool in fact is in the desired position, and signals from the spool position sensor may also be utilised by the I/O module 220 in the determination. According to the embodiment of fig. 5, pressure sensors 506-508 are utilised instead of angle sensor 110 to determine the change in articulation angle.

A first 506 and a second 507 pressure sensor are positioned between the input/output ports A and B of the DCV 502 and inlets of the actuator 501. These pressure sensors 506, 507 will be capable of detecting e.g. hose bursts.

A third pressure sensor 508 is located at the hydraulic pump 505 outlet. This pressure sensor may detect the pressure output by the hydraulic pump 505 and may e.g. be utilised to detect if the hydraulic pump 505 is supplying enough pressure. The change in position of the hydraulic cylinder 126 may be determined from the spool position sensor. However, as discussed, this does not take into account possible faults, such as hose bursts. The presence of a fault may be detected by an articulation angle sensor when such is used by detecting that the expected motion is not being carried out, and according to the present example, instead, this detection is performed using the pressure sensors 506-508.

Various faults may be detected using the pressure sensors 506-508. For example, the hose between DCV port B and the actuator 501 may be burst. If, in this case, the operator of the machine 100 requests a turning motion, the operator moves one or both joysticks 205, 206 to request a desired motion as above. A motion will then be requested by the processing unit 203, where the processing unit 203 sends the request to the relevant I/O module, such as I/O module 220. According to the present example, when the I/O module 220 determines whether the requested motion is actually to be carried out, the I/O module 220 utilises pressure signals from the pressure sensors 506-508 in the determination, where the pressure sensors may be connected directly to the I/O module 220 of fig. 2, e.g. in place of sensor 110, and where also the spool position sensor 504 may be connected to the I/O module 220.

The I/O module 220 may initiate the requested motion, and, assuming the DCV 502 is in state 503B, the I/O module 220 may determine, using pressure sensor 508, that the hydraulic pump 505 supplies the required pressure prior to the DCV 502 is requested to change state to state 503A or 503B. When this is the case, an electrical signal may be sent by I/O unit 220 to DCV 502 to change state, e.g. to state 503A. The spool moves, thereby connecting the hydraulic pump 505 to the B port.

In case the system is working properly, a motion of the actuator 501 may be determined to be carried out from the supply of a flow of hydraulic fluid, and the motion may be verified using the pressures measured by pressure sensors 506, 507, where e.g. it may be detected that the pressure of pressure sensor 507 corresponds to an expected pressure, and where it may also be detected from the pressure signals e.g. when the actuator reaches an end position.

On the other hand, in case there is a hose burst on the supply of hydraulic fluid, the signals from pressure sensor 507 located at B will not exhibit the expected increase in pressure due to the hose burst. This may then be used by the I/O module 220 to stop the attempted motion, since it may be deemed that the desired motion is not being carried out. In such cases, further actions may also be taken by the I/O module 220, such as e.g. activating a parking brake to prevent motion since safe steering is not possible.

Similarly, e.g. faults in hydraulic fluid supply pressure may be detected by pressure sensor 507 and/or pressure sensor 508, and again the parking brake may be activated because safe steering is not possible. In case the motion is attempted in the opposite direction, that which has been stated with regard to pressure sensor 507 will apply to pressure sensor 506 instead.

As is appreciated by the person skilled in the art, the example of fig. 5 is only exemplary, and various other designs of e.g. the directional control valve may alternatively be utilised. For example, the directional control valve need not comprise a spool having three states having four inlets/outlets, but the DCV spool may comprise any suitable number of states, and the function may also be realised using two or more spools and/or directional control valves in case this is found desired. Similarly, any suitable kind of hydraulic pump may be utilised.

According to embodiments of the invention, the machine 100 is designed to be remote controlled from a remote location. This is indicated by remote control station 260 in fig. 2. The remote control may be carried out by a wireless communication link being established between the machine 100 and the remote-control station to allow data to be transmitted between the machine 100 and the remote-control station 260. In this case, e.g. joysticks may be present at the remote-control station, and this joystick data may be utilised in the same manner as above to determine whether a motion is to be carried out.

Hitherto the invention has been described largely with reference to an LHD machine, where the machine may also be remote-controlled. The invention may be utilized in any kind of movable mining and/or construction machine, in particular machines comprising wheels and/or tracks for propulsion of the machine. The invention is also applicable for underground machines as well machines operating above ground. Furthermore, the invention may be utilised essentially for determining whether any motion being requested is to be carried out as requested or not.

## Claims

1. A method for controlling a mining and/or construction machine (100), the mining and/or construction machine (100) comprising:
at least one actuator (120-126) configured to give rise to a motion,
a first control unit (201), the first control unit (201) being configured to request a motion of the at least one actuator (120-126) in response to a change of state of operator controllable means (202, 205-207, 260), the first control unit (201) requesting a motion of the at least one actuator (120-126) by transmitting control commands to an I/O module (220-222) requesting the I/O module (220-222) to effectuate the actual motion of the actuator (120-126),
the I/O module (220-222) receiving the request for a motion of the at least one actuator (120-126) from the first control unit (201),
a processing unit (401-403) of the I/O module (220-222), when receiving the request for a motion of the at least one actuator (120-126), determining whether the requested motion will result in a machine behaviour that corresponds to an expected machine behaviour for a current state of the operator controllable means (202, 205-207, 260),
the I/O module (220-222) causing the at least one actuator (120-126) to perform the requested motion only when the requested motion results in a machine behaviour corresponding to an expected machine behaviour for the current state of the operator controllable means (202, 205-207, 260),
the I/O module (220-222) receiving a representation of the current state of the operator controllable means (202, 205-207, 260), and
determining whether the requested motion will result in a machine behaviour that corresponds to an expected machine behaviour for the current state of the operator controllable means (202, 205-207, 260) at least partly based on the received signals representing the current state of the operator controllable means (202, 205-207, 260),
the operator controllable means (202, 205-207, 260) comprising separate means for communicating the current state of the operator controllable means (202, 205-207, 260) to the I/O module (220-222).

2. Method according to claim 1, further comprising:
the I/O module (220-222) receiving sensor signals from at least one sensor (110), and
determining whether the requested activation will cause a motion corresponding to an expected machine behaviour at least partly based on the sensor signals from the at least one sensor (110).

3. Method according to any one of the claims 1 or 2, further comprising:
when determining whether the requested activation will cause a machine behaviour corresponding to the expected machine behaviour, determining whether the motion of the mining and/or construction machine (100) and/or motion of equipment attached thereto resulting from the motion of the at least one actuator (120-126) will correspond to an expected motion.

4. Method according to any one of the preceding claims, further including, when it is determined that the requested motion will cause an unexpected machine behaviour for the current state of the operator controllable means (202, 205-207, 260), prevent the requested actuator motion.

5. Method according to any one of the preceding claims, wherein the I/O module (220-222) controls motion of the at least one actuator (120-126) by converting control signals received from the at least one control unit (201) into actuator drive signals causing the actuator (120-126) to perform a requested motion.

6. Method according to any one of the preceding claims, further including:
the I/O module receiving the request for a motion of the at least one actuator (120-126) from the first control unit (201) through a first data bus (209).

7. Method according to any one of the preceding claims, further including:
the I/O module receiving the current state of the operator controllable means (202, 205-207, 260) through a second data bus (210), the second data bus (210) being distinct from a data bus (209) through which the request for a motion of the at least one actuator (120-126) is received from the first control unit (201).

8. Method according to any one of the preceding claims, wherein:
the operator controllable means comprise one or more from the group: at least one joystick, lever, control button, touch sensitive display, where an operator requests a motion of the mining and/or construction machine, and/or equipment attached thereto using the operator controllable means.

9. Method according to any one of the preceding claims, further including:
the first control unit (201) generating the request for a motion to be carried out by said at least one actuator (120-126) in response to an operator requesting a motion by means of the operator controllable means (202, 205-207, 260).

10. Method according to any one of the preceding claims, wherein the at least one actuator is controllable to perform a back and forth motion, the direction of motion being controlled by a directional control valve (502), wherein motion of the actuator is verified using a first pressure sensor (506) located between a directional control valve (502) and a first inlet of the actuator for causing a motion in a first direction, and a second pressure sensor (507) located between a directional control valve (502) and a second inlet of the actuator for causing an actuator motion in a second, e.g. opposite, direction, wherein
the I/O module (220-222) is configured to prevent a, and/or stop a commenced, requested motion when at least one of the first and second pressure sensors (506, 507) indicate that the requested and/or commenced motion does not correspond to the expected motion.

11. Method according to claim 10, wherein a hydraulic pump (505) provides hydraulic fluid for causing the actuator motion, wherein a third pressure sensor (508) is located upstream the hydraulic pump (505) and downstream the directional control valve (502), wherein
the I/O module (220-222) is configured to prevent a, and/or stop a commenced, requested motion also when the third pressure sensor (508) indicate that the requested and/or commenced motion does not correspond to the expected motion.

12. Method according to claim 10 or 11, wherein the actuator is an actuator for controlling an articulation angle between a front (100a) and a rear (100b) portion of the mining and/or construction machine (100).

13. Method according to any one of the preceding claims, wherein the at least one actuator (120-126) is at least one actuator from any of the groups:
- hydraulic actuator, such as a hydraulic cylinder, hydraulic motor or pump or hydraulic rotary actuator;
- pneumatic actuator, such as a pneumatic cylinder, pneumatic motor or pneumatic rotary actuator;
- electric actuator, such as an electric motor or electric linear actuator.

14. Computer program comprising instructions which, when the program is executed by a computer, cause the computer to carry out the method according to any one of the preceding claims.

15. Computer-readable medium comprising instructions which, when executed by a computer, cause the computer to carry out the method according to any one of the claims 1-13.

16. System for controlling a mining and/or construction machine (100), the mining and/or construction machine (100) comprising:
at least one actuator (120-126) configured to give rise to a motion;
an I/O module (220-222);
a first control unit (201), the first control unit (201) being configured to request a motion of the at least one actuator (120-126) in response to a change of state of operator controllable means (202, 205-207, 260), the first control unit (201) being configured to request a motion of the at least one actuator (120-126) by transmitting control commands to the I/O module (220-222), requesting the I/O module (220-222) to effectuate the actual motion of the actuator (120-126),
the I/O module (220-222) comprising a processing unit (401-403) configured to receive the request for a motion of the at least one actuator from the first control unit (201),
the processing unit (401-403) of the I/O module (220-222) being configured to, when receiving the request for a motion of the at least one actuator (120-126), determine whether the requested motion will result in a machine behaviour that corresponds to an expected machine behaviour for a current state of the operator controllable means (202, 205-207, 260),
the I/O module (220-222) being configured to cause the at least one actuator (120-126) to perform the requested motion only when the requested motion results in a machine behaviour corresponding to an expected machine behaviour for the current state of the operator controllable means (202, 205-207, 260),
the I/O module (220-222) being configured to receive a representation of the current state of the operator controllable means (202, 205-207, 260),
where determining whether the requested motion will result in a machine behaviour that corresponds to an expected machine behaviour for the current state of the operator controllable means (202, 205-207, 260) is at least partly based on the received signals representing the current state of the operator controllable means (202, 205-207, 260),
wherein the operator controllable means (202, 205-207, 260) comprise separate means for communicating the current state of the operator controllable means (202, 205-207, 260) to the I/O module (220-222),
the system being configured to implement the method according to any one of claims 1-13.

17. System according to claim 16, **characterised in that** the I/O module (220-222) comprises a plurality of processing units (401-403), wherein the I/O module (220-222) is configured such that when the determination is made by one processing unit (401-403), the determination is validated by at least one other processing unit (401-403) of the I/O module (220-222).

18. Mining and/or construction machine (100) comprising a system according to claim 16 or 17.

## Patentansprüche

1. Verfahren zur Steuerung einer Abbau- und/oder Baumaschine (100), wobei die Abbau- und/oder Baumaschine (100) Folgendes umfasst:
mindestens einen Stellantrieb (120-126), der ausgebildet ist, eine Bewegung hervorzurufen;
eine erste Steuereinheit (201), wobei die erste Steuereinheit (201) ausgebildet ist, als Reaktion auf eine Zustandsänderung von vom Bediener steuerbaren Mitteln (202, 205-207, 260) eine Bewegung des mindestens einen Stellantriebs (120-126) anzufordern, wobei die erste Steuereinheit (201) eine Bewegung des mindestens einen Stellantriebs (120-126) anfordert, indem sie Steuerbefehle an ein E/A-Modul (220-222) überträgt, in denen das E/A-Modul (220-222) aufgefordert wird, die tatsächliche Bewegung des Stellantriebs (120-126) zu bewirken,
wobei das E/A-Modul (220-222) die Anforderung für eine Bewegung des mindestens einen Stellantriebs (120-126) von der ersten Steuereinheit (201) empfängt,
eine Verarbeitungseinheit (401-403) des E/A-Moduls (220-222), die, wenn sie die Anforderung für eine Bewegung des mindestens einen Stellantriebs (120-126) empfängt, bestimmt, ob die angeforderte Bewegung zu einem Maschinenverhalten führen wird, das einem erwarteten Maschinenverhalten für einen aktuellen Zustand der vom Bediener steuerbaren Mittel (202, 205-207, 260) entspricht,
wobei das E/A-Modul (220-222) den mindestens einen Stellantrieb (120-126) veranlasst, die angeforderte Bewegung nur dann durchzuführen, wenn die angeforderte Bewegung zu einem Maschinenverhalten führt, das einem erwarteten Maschinenverhalten für den aktuellen Zustand der vom Bediener steuerbaren Mittel (202, 205-207, 260) entspricht,
wobei das E/A-Modul (220-222) eine Repräsentation des aktuellen Zustands der vom Bediener steuerbaren Mittel (202, 205-207, 260) empfängt und
mindestens teilweise basierend auf den empfangenen Signalen, die den aktuellen Zustand der vom Bediener steuerbaren Mittel (202, 205-207, 260) repräsentieren, bestimmt, ob die angeforderte Bewegung zu einem Maschinenverhalten führen wird, das einem erwarteten Maschinenverhalten für den aktuellen Zustand der vom Bediener steuerbaren Mittel (202, 205-207, 260) entspricht,
wobei die vom Bediener steuerbaren Mittel (202, 205-207, 260) separate Mittel zum Übermitteln des aktuellen Zustands der vom Bediener steuerbaren Mittel (202, 205-207, 260) an das I/O-Modul (220-222) umfassen.

2. Verfahren nach Anspruch 1, weiter umfassend:
wobei das E/A-Modul (220-222) Sensorsignale von mindestens einem Sensor (110) empfängt und
mindestens teilweise basierend auf den Sensorsignalen von dem mindestens einen Sensor (110) bestimmt, ob die angeforderte Aktivierung eine Bewegung verursachen wird, die einem erwarteten Maschinenverhalten entspricht.

3. Verfahren nach einem der Ansprüche 1 oder 2, weiter umfassend:
wobei, wenn bestimmt wird, ob die angeforderte Aktivierung ein Maschinenverhalten verursachen wird, das dem erwarteten Maschinenverhalten entspricht, bestimmt wird, ob die Bewegung der Abbau- und/oder Baumaschine (100) und/oder die Bewegung daran angebrachter Ausrüstung, die aus der Bewegung des mindestens einen Stellantriebs (120-126) resultiert, einer erwarteten Bewegung entsprechen wird.

4. Verfahren nach einem der vorstehenden Ansprüche, weiter einschließend Verhindern der angeforderten Stellantriebbewegung, wenn bestimmt wird, dass die angeforderte Bewegung ein unerwartetes Maschinenverhalten für den aktuellen Zustand der vom Bediener steuerbaren Mittel (202, 205-207, 260) verursachen wird.

5. Verfahren nach einem der vorstehenden Ansprüche, wobei das E/A-Modul (220-222) die Bewegung des mindestens einen Stellantriebs (120-126) steuert, indem es von der mindestens einen Steuereinheit (201) empfangene Steuersignale in Antriebssignale für den Stellantrieb umwandelt, die den Stellantrieb (120-126) veranlassen, eine angeforderte Bewegung durchzuführen.

6. Verfahren nach einem der vorstehenden Ansprüche, das weiter einschließt:
dass das E/A-Modul die Anforderung für eine Bewegung des mindestens einen Stellantriebs (120-126) von der ersten Steuereinheit (201) über einen ersten Datenbus (209) empfängt.

7. Verfahren nach einem der vorstehenden Ansprüche, das weiter einschließt:
dass das E/A-Modul den aktuellen Zustand der vom Bediener steuerbaren Mittel (202, 205-207, 260) über einen zweiten Datenbus (210) empfängt, wobei der zweite Datenbus (210) verschieden von einem Datenbus (209) ist, über den die Anforderung für eine Bewegung des mindestens einen Stellantriebs (120-126) von der ersten Steuereinheit (201) empfangen wird.

8. Verfahren nach einem der vorstehenden Ansprüche, wobei:
die vom Bediener steuerbaren Mittel eines oder mehrere aus der Gruppe umfassen: mindestens einen Joystick, Hebel, Steuerknopf, berührungsempfindliche Anzeige, wobei ein Bediener eine Bewegung der Abbau- und/oder Baumaschine und/oder daran angebrachter Ausrüstung mittels der vom Bediener steuerbaren Mittel anfordert.

9. Verfahren nach einem der vorstehenden Ansprüche, das weiter einschließt:
dass die erste Steuereinheit (201) die Anforderung für eine von dem mindestens einen Stellantrieb (120-126) durchzuführende Bewegung als Reaktion darauf erzeugt, dass ein Bediener mittels der vom Bediener steuerbaren Mittel (202, 205- 207, 260) eine Bewegung anfordert.

10. Verfahren nach einem der vorstehenden Ansprüche, wobei der mindestens eine Stellantrieb steuerbar ist, um eine Hin- und Herbewegung durchzuführen, wobei die Bewegungsrichtung durch ein Wegeventil (502) gesteuert wird, wobei die Bewegung des Stellantriebs mittels eines ersten Drucksensors (506), der zwischen einem Wegeventil (502) und einem ersten Einlass des Stellantriebs zum Hervorrufen einer Bewegung in einer ersten Richtung angeordnet ist, und eines zweiten Drucksensors (507), der zwischen einem Wegeventil (502) und einem zweiten Einlass des Stellantriebs zum Hervorrufen einer Stellantriebbewegung in einer zweiten, z. B. entgegengesetzten, Richtung angeordnet ist, verifiziert wird, wobei
das E/A-Modul (220-222) ausgebildet ist, eine angeforderte Bewegung zu verhindern und/oder eine begonnene angeforderte Bewegung anzuhalten, wenn mindestens einer von dem ersten und zweiten Drucksensor (506, 507) anzeigt, dass die angeforderte und/oder begonnene Bewegung nicht der erwarteten Bewegung entspricht.

11. Verfahren nach Anspruch 10, wobei eine Hydraulikpumpe (505) Hydraulikfluid zum Hervorrufen der Stellantriebbewegung bereitstellt, wobei ein dritter Drucksensor (508) stromaufwärts der Hydraulikpumpe (505) und stromabwärts des Wegeventils (502) angeordnet ist, wobei
das E/A-Modul (220-222) ausgebildet ist, eine angeforderte Bewegung auch dann zu verhindern und/oder eine begonnene angeforderte Bewegung auch dann anzuhalten, wenn der dritte Drucksensor (508) anzeigt, dass die angeforderte und/oder begonnene Bewegung nicht der erwarteten Bewegung entspricht.

12. Verfahren nach Anspruch 10 oder 11, wobei der Stellantrieb ein Stellantrieb zum Steuern eines Knickwinkels zwischen einem Vorderteil (100a) und einem Hinterteil (100b) der Abbau- und/oder Baumaschine (100) ist.

13. Verfahren nach einem der vorstehenden Ansprüche, wobei der mindestens eine Stellantrieb (120-126) mindestens ein Stellantrieb aus einer der Gruppen ist:
- hydraulischer Stellantrieb, wie etwa ein Hydraulikzylinder, Hydraulikmotor oder eine Hydraulikpumpe oder ein hydraulischer Drehstellantrieb;
- pneumatischer Stellantrieb, wie etwa ein Pneumatikzylinder, Pneumatikmotor oder ein pneumatischer Drehstellantrieb;
- elektrischer Stellantrieb, wie etwa ein Elektromotor oder ein elektrischer Linearantrieb.

14. Computerprogramm, das Anweisungen umfasst, die, wenn das Programm von einem Computer ausgeführt wird, den Computer veranlassen, das Verfahren nach einem der vorstehenden Ansprüche durchzuführen.

15. Computerlesbares Medium, das Anweisungen umfasst, die, wenn sie von einem Computer ausgeführt werden, den Computer veranlassen, das Verfahren nach einem der Ansprüche 1-13 durchzuführen.

16. System zur Steuerung einer Abbau- und/oder Baumaschine (100), wobei die Abbau- und/oder Baumaschine (100) Folgendes umfasst:
mindestens einen Stellantrieb (120-126), der ausgebildet ist, eine Bewegung hervorzurufen;
ein E/A-Modul (220-222);
eine erste Steuereinheit (201), wobei die erste Steuereinheit (201) ausgebildet ist, als Reaktion auf eine Zustandsänderung von vom Bediener steuerbaren Mitteln (202, 205-207, 260) eine Bewegung des mindestens einen Stellantriebs (120-126) anzufordern, wobei die erste Steuereinheit (201) ausgebildet ist, eine Bewegung des mindestens einen Stellantriebs (120-126) anzufordern, indem sie Steuerbefehle an das E/A-Modul (220- 222) überträgt, in denen das E/A-Modul (220-222) aufgefordert wird, die tatsächliche Bewegung des Stellantriebs (120-126) zu bewirken,
wobei das E/A-Modul (220-222) eine Verarbeitungseinheit (401-403) umfasst, die ausgebildet ist, die Anforderung für eine Bewegung des mindestens einen Stellantriebs von der ersten Steuereinheit (201) zu empfangen,
wobei die Verarbeitungseinheit (401-403) des E/A-Moduls (220-222) ausgebildet ist, wenn sie die Anforderung für eine Bewegung des mindestens einen Stellantriebs (120-126) empfängt, zu bestimmen, ob die angeforderte Bewegung zu einem Maschinenverhalten führen wird, das einem erwarteten Maschinenverhalten für einen aktuellen Zustand der vom Bediener steuerbaren Mittel (202, 205-207, 260) entspricht,
wobei das E/A-Modul (220-222) ausgebildet ist, den mindestens einen Stellantrieb (120-126) zu veranlassen, die angeforderte Bewegung nur dann durchzuführen, wenn die angeforderte Bewegung zu einem Maschinenverhalten führt, das einem erwarteten Maschinenverhalten für den aktuellen Zustand der vom Bediener steuerbaren Mittel (202, 205- 207, 260) entspricht,
wobei das E/A-Modul (220-222) ausgebildet ist, eine Repräsentation des aktuellen Zustands der vom Bediener steuerbaren Mittel (202, 205-207, 260) zu empfangen, wobei das Bestimmen, ob die angeforderte Bewegung zu einem Maschinenverhalten führen wird, das einem erwarteten Maschinenverhalten für den aktuellen Zustand der vom Bediener steuerbaren Mittel (202, 205-207, 260) entspricht, mindestens teilweise auf den empfangenen Signalen basiert, die den aktuellen Zustand der vom Bediener steuerbaren Mittel (202, 205-207, 260) repräsentieren,
wobei die vom Bediener steuerbaren Mittel (202, 205-207, 260) separate Mittel zum Übermitteln des aktuellen Zustands der vom Bediener steuerbaren Mittel (202, 205-207, 260) an das E/A-Modul (220-222) umfassen, wobei das System ausgebildet ist, das Verfahren nach einem der Ansprüche 1- 13 zu implementieren.

17. System nach Anspruch 16, **dadurch gekennzeichnet, dass** das E/A-Modul (220-222) eine Vielzahl von Verarbeitungseinheiten (401-403) umfasst, wobei das E/A-Modul (220-222) so ausgebildet ist, dass, wenn die Bestimmung durch eine Verarbeitungseinheit (401-403) vorgenommen wird, die Bestimmung durch mindestens eine andere Verarbeitungseinheit (401-403) des E/A-Moduls (220-222) validiert wird.

18. Abbau- und/oder Baumaschine (100), die ein System nach Anspruch 16 oder 17 umfasst.

## Revendications

1. Procédé de commande d'une machine d'exploitation minière et/ou de construction (100), la machine d'exploitation minière et/ou de construction (100) comprenant :
au moins un actionneur (120-126) configuré pour générer un mouvement ;
une première unité de commande (201), la première unité de commande (201) étant configurée pour demander un mouvement de l'au moins un actionneur (120-126) en réponse à un changement d'état de moyens commandables par un opérateur (202, 205-207, 260), la première unité de commande (201) demandant un mouvement de l'au moins un actionneur (120-126) en transmettant des instructions de commande à un module d'E/S (220-222) demandant au module d'E/S (220-222) d'effectuer le mouvement effectif de l'actionneur (120-126),
la réception, par le module d'E/S (220-222), de la demande de mouvement de l'au moins un actionneur (120-126) issue de la première unité de commande (201),
la détermination, par une unité de traitement (401-403) du module d'E/S (220-222), lorsqu'elle reçoit la demande de mouvement de l'au moins un actionneur (120-126), de savoir si le mouvement demandé entraînera un comportement de machine qui correspond à un comportement de machine attendu pour un état courant des moyens commandables par un opérateur (202, 205-207, 260),
le fait que le module d'E/S (220-222) amène l'au moins un actionneur (120-126) à effectuer le mouvement demandé uniquement lorsque le mouvement demandé entraîne un comportement de machine correspondant à un comportement de machine attendu pour l'état courant des moyens commandables par un opérateur (202, 205-207, 260),
la réception, par le module d'E/S (220-222), d'une représentation de l'état courant des moyens commandables par un opérateur (202, 205-207, 260), et
la détermination de savoir si le mouvement demandé entraînera un comportement de machine qui correspond à un comportement de machine attendu pour l'état courant des moyens commandables par un opérateur (202, 205-207, 260) sur la base au moins en partie des signaux reçus représentant l'état courant des moyens commandables par un opérateur (202, 205-207, 260),
les moyens commandables par un opérateur (202, 205-207, 260) comprenant des moyens séparés pour communiquer l'état courant des moyens commandables par un opérateur (202, 205-207, 260) au module d'E/S (220-222).

2. Procédé selon la revendication 1, comprenant en outre :
la réception, par le module d'E/S (220-222), de signaux de capteur issus d'au moins un capteur (110), et
la détermination de savoir si l'activation demandée entraînera un mouvement correspondant à un comportement de machine attendu sur la base au moins en partie des signaux de capteur issus de l'au moins un capteur (110).

3. Procédé selon l'une quelconque des revendications 1 ou 2, comprenant en outre :
lorsqu'il est déterminé si l'activation demandée entraînera un comportement de machine correspondant au comportement de machine attendu, le fait de déterminer si le mouvement de la machine d'exploitation minière et/ou de construction (100) et/ou un mouvement d'un équipement fixé à celle-ci résultant du mouvement de l'au moins un actionneur (120-126) correspondra à un mouvement attendu.

4. Procédé selon l'une quelconque des revendications précédentes, incluant en outre, lorsqu'il est déterminé que le mouvement demandé entraînera un comportement de machine inattendu pour l'état actuel des moyens commandables par un opérateur (202, 205-207, 260), le fait d'empêcher le mouvement d'actionneur demandé.

5. Procédé selon l'une quelconque des revendications précédentes, dans lequel le module d'E/S (220-222) commande un mouvement de l'au moins un actionneur (120-126) en convertissant des signaux de commande reçus de l'au moins une unité de commande (201) en signaux de pilotage d'actionneur amenant l'actionneur (120-126) à effectuer un mouvement demandé.

6. Procédé selon l'une quelconque des revendications précédentes, incluant en outre :
le module d'E/S recevant la demande de mouvement de l'au moins un actionneur (120-126) issue de la première unité de commande (201) à travers un premier bus de données (209).

7. Procédé selon l'une quelconque des revendications précédentes, incluant en outre :
le module d'E/S recevant l'état courant des moyens commandables par un opérateur (202, 205-207, 260) à travers un deuxième bus de données (210), le deuxième bus de données (210) étant distinct d'un bus de données (209) à travers lequel la demande de mouvement de l'au moins un actionneur (120-126) est reçue de la première unité de commande (201).

8. Procédé selon l'une quelconque des revendications précédentes, dans lequel :
les moyens commandables par un opérateur comprennent un ou plusieurs éléments parmi le groupe consistant en : au moins un joystick, levier, bouton de commande, écran tactile, où un opérateur demande un mouvement de la machine d'exploitation minière et/ou de construction, et/ou d'un équipement fixé à celle-ci, à l'aide des moyens commandables par un opérateur.

9. Procédé selon l'une quelconque des revendications précédentes, incluant en outre :
la première unité de commande (201) générant la demande de mouvement à effectuer par ledit au moins un actionneur (120-126) en réponse à un opérateur demandant un mouvement au moyen des moyens commandables par un opérateur (202, 205-207, 260).

10. Procédé selon l'une quelconque des revendications précédentes, dans lequel l'au moins un actionneur est commandable afin d'effectuer un mouvement de va-et- vient, la direction de mouvement étant commandée par une vanne de commande directionnelle (502), dans lequel le mouvement de l'actionneur est vérifié à l'aide d'un premier capteur de pression (506) situé entre une vanne de commande directionnelle (502) et une première entrée de l'actionneur pour provoquer un mouvement dans une première direction, et un deuxième capteur de pression (507) situé entre une vanne de commande directionnelle (502) et une deuxième entrée de l'actionneur pour provoquer un mouvement d'actionneur dans une deuxième direction, par exemple opposée, dans lequel
le module d'E/S (220-222) est configuré pour empêcher, et/ou pour arrêter, un mouvement demandé ayant débuté, lorsqu'au moins un des premier et deuxième capteurs de pression (506, 507) indique que le mouvement demandé et/ou ayant débuté ne correspond pas au mouvement attendu.

11. Procédé selon la revendication 10, dans lequel une pompe hydraulique (505) fournit du fluide hydraulique pour provoquer le mouvement de l'actionneur, dans lequel un troisième capteur de pression (508) est situé en amont de la pompe hydraulique (505) et en aval de la vanne de commande directionnelle (502), dans lequel
le module d'E/S (220-222) est configuré pour empêcher, et/ou pour arrêter, un mouvement demandé ayant débuté, également lorsque le troisième capteur de pression (508) indique que le mouvement demandé et/ou ayant débuté ne correspond pas au mouvement attendu.

12. Procédé selon la revendication 10 ou la revendication 11, dans lequel l'actionneur est un actionneur de commande d'un angle d'articulation entre une partie avant (100a) et une partie arrière (100b) de la machine d'exploitation minière et/ou de construction (100).

13. Procédé selon l'une quelconque des revendications précédentes, dans lequel l'au moins un actionneur (120-126) est au moins un actionneur parmi l'un quelconque des groupes :
- actionneur hydraulique, tel qu'un vérin hydraulique, moteur ou pompe hydraulique, ou actionneur rotatif hydraulique ;
- actionneur pneumatique, tel qu'un vérin pneumatique, moteur pneumatique ou actionneur rotatif pneumatique ;
- actionneur électrique, tel qu'un moteur électrique ou actionneur linéaire électrique.

14. Programme informatique comprenant des instructions qui, lorsque le programme est exécuté par un ordinateur, amènent l'ordinateur à effectuer le procédé selon l'une quelconque des revendications précédentes.

15. Support lisible par ordinateur comprenant des instructions qui, lorsqu'elles sont exécutées par un ordinateur, amènent l'ordinateur à effectuer le procédé selon l'une quelconque des revendications 1 à 13.

16. Système de commande d'une machine d'exploitation minière et/ou de construction (100), la machine d'exploitation minière et/ou de construction (100) comprenant :
au moins un actionneur (120-126) configuré pour générer un mouvement ;
un module d'E/S (220-222) ;
une première unité de commande (201), la première unité de commande (201) étant configurée pour demander un mouvement de l'au moins un actionneur (120-126) en réponse à un changement d'état de moyens commandables par un opérateur (202, 205-207, 260), la première unité de commande (201) étant configurée pour demander un mouvement de l'au moins un actionneur (120-126) en transmettant des instructions de commande au module d'E/S (220-222), demandant au module d'E/S (220-222) d'effectuer le mouvement effectif de l'actionneur (120-126),
le module d'E/S (220-222) comprenant une unité de traitement (401-403) configurée pour recevoir la demande de mouvement de l'au moins un actionneur issue de la première unité de commande (201),
l'unité de traitement (401-403) du module d'E/S (220-222) étant configurée pour, lorsqu'elle reçoit la demande de mouvement de l'au moins un actionneur (120-126), déterminer si le mouvement demandé entraînera un comportement de machine qui correspond à un comportement de machine attendu pour un état courant des moyens commandables par un opérateur (202, 205-207, 260),
le module d'E/S (220-222) étant configuré pour amener l'au moins un actionneur (120-126) à effectuer le mouvement demandé uniquement lorsque le mouvement demandé entraîne un comportement de machine correspondant à un comportement de machine attendu pour l'état courant des moyens commandables par un opérateur (202, 205-207, 260),
le module d'E/S (220-222) étant configuré pour recevoir une représentation de l'état courant des moyens commandables par un opérateur (202, 205-207, 260), où la détermination de savoir si le mouvement demandé entraînera un comportement de machine qui correspond à un comportement de machine attendu pour l'état courant des moyens commandables par un opérateur (202, 205-207, 260) est basée au moins en partie sur les signaux reçus représentant l'état courant des moyens commandables par un opérateur (202, 205-207, 260),
dans lequel les moyens commandables par un opérateur (202, 205-207, 260) comprenant des moyens séparés pour communiquer l'état courant des moyens commandables par un opérateur (202, 205-207, 260) au module d'E/S (220-222), le système étant configuré pour mettre en œuvre le procédé selon l'une quelconque des revendications 1 à 13.

17. Système selon la revendication 16, **caractérisé en ce que** le module d'E/S (220-222) comprend une pluralité d'unités de traitement (401-403), dans lequel le module d'E/S (220-222) est configuré de telle sorte que lorsque la détermination est faite par une unité de traitement (401-403), la détermination est validée par au moins une autre unité de traitement (401-403) du module d'E/S (220-222).

18. Machine d'exploitation minière et/ou de construction (100) comprenant un système selon la revendication 16 ou la revendication 17.
